# EUROPÄISCHE PATENTSCHRIFT

(11) **EP 0 558 692 B1**
(45) Veröffentlichungstag und Bekanntmachung des Hinweises auf die Patenterteilung: **05.06.1996**
(21) Anmeldenummer: 92906018.4
(22) Anmeldetag: 06.03.1992
(51) Int. Cl.: B27G 21/00, B27C 5/04, B23Q 11/06

(54) **SCHUTZ- UND FÜHRUNGSVORRICHTUNG FÜR HOLZFRÄSMASCHINEN**
PROTECTIVE AND GUIDING DEVICE FOR WOOD SHAPING MACHINES
DISPOSITIF DE PROTECTION ET DE GUIDAGE POUR FRAISEUSES A BOIS---

(30) Priorität: 25.09.1991 DE 4131943
(43) Veröffentlichungstag der Anmeldung: 08.09.1993
(73) Patentinhaber: AIGNER, Georg, D-94419 Reisbach (DE)
(72) Erfinder: AIGNER, Georg, D-94419 Reisbach (DE)
(74) Vertreter: Gustorf, Gerhard, Dipl.-Ing.
(86) Internationale Anmeldenummer: EP9200503
(87) Internationale Veröffentlichungsnummer: WO9305937

(56) Entgegenhaltungen:
- DE-A- 3 931 141
- GB-A- 550 950
- GB-A- 926 058

## Beschreibung

Die Erfindung betrifft eine Schutz- und Führungsvorrichtung für Holzfräsmaschinen zum Bearbeiten bogenförmiger Werkstücke mittels eines an einer Spindel angebrachten Fräswerkzeugs, das aus einem waagrechten Maschinentisch vertikal herausragt und unter einer am Maschinentisch befestigten Abdeckhaube liegt, innerhalb der ein Führungsorgan für das Werkstück gehalten ist und die aus zwei durch eine Rückwand miteinander verbundenen Seitenwänden, einem höhenverstellbaren, vorderen Schutzschild und einem Deckel besteht, an dem eine Anschlußöffnung für eine Absaugvorrichtung vorgesehen ist.

Gegenstand der DE-OS 39 31 141 ist eine Späneauffangvorrichtung für eine Tischfräsmaschine zum Fräsen geschweifter Werkstücke aus Holz. Im Bereich der nach vorn offenen Seite der Abdeckhaube sind zwei zueinander parallele, vertikale Klemmleisten mit Nuten angebracht, die zur Befestigung eines Bogenfräsanschlages oder eines Anlaufringes dienen. Die Nuten haben den Nachteil, daß sie rasch verschmutzen oder verharzen und somit häufig gereinigt werden müssen. Der Bogenfräsanschlag kann lediglich in vertikaler Richtung an der Abdeckhaube verstellt werden und wird mittels Innensechskantschrauben fixiert, die innerhalb der Abdeckhaube nur mittels eines Werkzeuges und verhältnismäßig schlecht zugänglich sind. Um die gewünschte Frästiefe einstellen zu können, muß die gesamte Abdeckhaube auf dem Maschinentisch verstellt werden; sofern größere Veränderungen der Frästiefe erforderlich werden, muß ein anderer Anlaufring oder ein anderer Bogenfräsanschlag eingesetzt werden, was aus den oben angegebenen Gründen verhältnismäßig kompliziert ist. Der Deckel der Abdeckhaube ist zweiteilig ausgebildet, wobei der hintere Teil am Maschinentisch befestigt ist, während der vordere Teil auf der Oberseite des hinteren Teils horizontal verschiebbar angebracht ist und das höhenverstellbare Schutzschild trägt. Aufgrund dieser Konstruktion sind Arbeitsstellungen unvermeidlich, bei denen der vordere Teil des Deckel ganz ausgezogen ist, so daß im mittleren Bereich über der Spindel eine Öffnung gebildet wird, durch die die Späne entweichen, bevor sie von der Absaugvorrichtung erfaßt werden können. Ferner ist nachteilig, daß vor Arbeitsbeginn mittels einer Justierplatte die Abdeckhaube für den anschließend einzubauenden Anlaufring zentriert werden muß. Aufgrund der angegebenen Konstruktion ist innerhalb der Abdeckhaube verhältnismäßig viel Platz für die Befestigung der genannten Führungsorgane erforderlich, so daß der Verwendung größerer Fräswerkzeuge Grenzen gesetzt sind. Vorstehende Schrauben innerhalb der Abdeckhaube stellen zudem eine große Gefahr für das rotierende Werkzeug dar.

Der Erfindung liegt die Aufgabe zugrunde, eine Schutz- und Führungsvorrichtung der eingangs umrissenen Bauart zur Verfügung zu stellen, die eine einfache und rasche Anpassung ihrer Stellung an den jeweiligen Bearbeitungsvorgang gestattet und eine sichere Zentrierung des Führungsorgans ohne platzraubende Befestigungsorgane oder Werkzeuge ermöglicht.

Bei der Vorrichtung der angegebenen Gattung wird diese Aufgabe erfindungsgemäß dadurch gelöst, daß die beiden Seitenwände parallel zueinander verlaufende, glatte und ebene Innenflächen haben, unabhängig voneinander horizontal verschiebbar an einem vom Deckel nach unten abstehenden Rand fixierbar sind und in ihrem unteren Bereich vertikale Längsschlitze zum Durchstecken von Schrauben für die Befestigung der Abdeckhaube auf dem Maschinentisch haben.

Bei dieser Lösung können die beiden Seitenwände unabhängig voneinander verschoben und festgestellt werden, so daß eine Anpassung an die jeweilige Frästiefe und den Werkzeugdurchmesser möglich ist und der von der Haube abgedeckte Raum optimiert werden kann. Im allgemeinen wird man hierzu die auf der Einzugsseite liegende Seitenwand gegenüber der anderen Seitenwand weiter zurückstellen, um auf diese Weise den Fräsbereich so umfassend wie möglich abzudecken.

Die Schrauben haben in vorteilhafter Weise einen als Klemmhebel ausgebildeten Kopf, so daß sie ohne Einsatz von Werkzeugen manuell festgezogen oder gelöst werden können.

Nach einem weiteren Merkmal der Erfindung sind in den Seitenwänden vertikale Haltebohrungen zur Aufnahme von Tragelementen für Druck- oder Führungsorgane ausgebildet. Damit lassen sich derartige Hilfseinrichtungen unmittelbar an der Abdeckhaube befestigen.

Es ist besonders vorteilhaft, wenn die vorderen Kanten der Seitenwände Vertikalnuten zur höhenverstellbaren Aufnahme eines Hilfswerkzeugs, beispielsweise einer Anlaufleiste oder eines Fräsbocks haben.

Dabei kann an der Anlaufleiste ein Befestigungswinkel mit zwei L-förmigen Schenkeln zum Eingriff in die Längsschlitze angebracht sein, wobei ein Schenkel schwenkbar gelagert ist. Um den beweglichen Schenkel zu schwenken, ist in einer Aussparung des Befestigungswinkels ein durch eine Feststellschraube höhenbeweglicher Keil vorgesehen.

Um die wirksame Länge der Anlaufleiste einzustellen, ist der Befestigungswinkel in Längsrichtung der Anlaufleiste verstellbar an dieser befestigt, und zwar am einfachsten mittels der Feststellschraube.

Nach einem besonders vorteilhaften Merkmal der Erfindung stützt sich an den zueinander parallelen Innenflächen der Seitenwände ein Führungsorgan mit zwei zueinander parallelen Führungskanten ab und ist an diesen Innenflächen horizontal und vertikal verschiebbar geführt.

Bei einer derartigen Lösung können die an der Abdeckhaube angebrachten Klemmleisten der bekannten Konstruktion sowie Justierelemente entfallen, da das Führungsorgan lediglich durch seine Führungskanten präzise und drehfest innerhalb der Abdeckhaube fixiert ist und immer automatisch in zentrierter Stellung gehalten wird. Klemmschrauben o. dgl., die innerhalb der Abdeckhaube schwer zugänglich sind, sind ebenfalls entbehrlich, so daß eine rasche Einstellung des Führungsorgans zur Anpassung an unterschiedliche Frästiefen möglich ist, ohne hierzu die Stellung der Abdeckhaube über der Werkzeugspindel verändern zu müssen.

Wenn das Führungsorgan über ein Radiallager auf der Spindel befestigt ist, kann es bei Bedarf rasch ausgetauscht werden. Bei einer Höhenverstellung der Spindel mit dem Werkzeug wird dabei automatisch auch das Führungsorgan richtig eingestellt, ohne daß dieses mit Hilfe eines Werkzeuges gelöst und anschließend wieder fixiert werden muß.

Das Führungsorgan kann so ausgebildet sein, daß es eine an der Spindel gelagerte, an den Innenflächen der Seitenwände abgestützte Grundplatte aufweist, die einen Bogenfräsanschlag trägt, welcher zur Einstellung der Frästiefe auf der Grundplatte horizontal verstellbar gelagert ist.

Bei dieser Lösung läßt sich der Bogenfräsanschlag zur Veränderung der Frästiefe mit wenigen Handgriffen einfach und rasch auf der Grundplatte fixieren, so daß anschließend ein bogenförmiges oder geschweiftes Werkstück mittels Punktfräsen bearbeitet werden kann.

Die gewählte Stellung des Bogenfräsanschlags auf der Grundplatte kann mittels Klemmschrauben fixiert werden, die durch Längsnuten greifen, welche parallel zu den Führungskanten in den Bogenfräsanschlag eingearbeitet sind. Die Klemmschrauben sind leicht zugänglich und können mit einem Werkzeug rasch gelöst und wieder festgezogen werden.

Eine andere Möglichkeit besteht darin, einen Teil des Führungsorgans als Anlaufring auszubilden, von dem eine Anlaufleiste schwenkbar absteht. Damit steht eine Einheit zur Verfügung, bei der die Anlaufleiste im Anlaufring integriert ist und somit keine zusätzliche Befestigung erfordert. Die Länge der Anlaufleiste kann teleskopisch veränderbar sein.

Die Erfindung ist nachstehend an Ausführungsbeispielen erläutert, die in der Zeichnung dargestellt sind. Es zeigen:
Figur 1 eine Schrägansicht einer Schutz- und Führungsvorrichtung von vorn, wobei als Führungsorgan ein Bogenfräsanschlag dient,
Figur 2 eine perspektivische Rückansicht der Schutz- und Führungsvorrichtung gemäß Figur 1 ohne Tragelemente,
Figur 3 eine Draufsicht der Schutz- und Führungsvorrichtung in einer ersten Arbeitsstellung,
Figur 4 eine Draufsicht in einer zweiten Arbeitsstellung,
Figur 5 die Ansicht des in Figur 1 verwendeten Bogenfräsanschlages,
Figur 6 eine Unteransicht des Bogenfräsanschlags der Figur 5,
Figur 7 die Schutz- und Führungsvorrichtung in Verbindung mit einem Anlaufring und einer Anlaufleiste,
Figur 8 eine Draufsicht der an eine Seitenwand angebauten Anlaufleiste gemäß Figur 7,
Figur 9 eine Draufsicht der Anlaufleiste gemäß Figur 8,
Figur 10 eine aufgeschnittene` vordere Schrägansicht der Anlaufleiste zur Darstellung des Befestigungswinkels,
Figur 11 die Explosionsdarstellung des Befestigungswinkels,
Figur 12 eine Schnittdarstellung des in die Anlaufleiste eingebauten Befestigungswinkels in der Ebene XXII-XXII der Figur 9 und
Figur 13 die Draufsicht einer Variante des Führungsorgans mit integrierter Anlaufleiste.

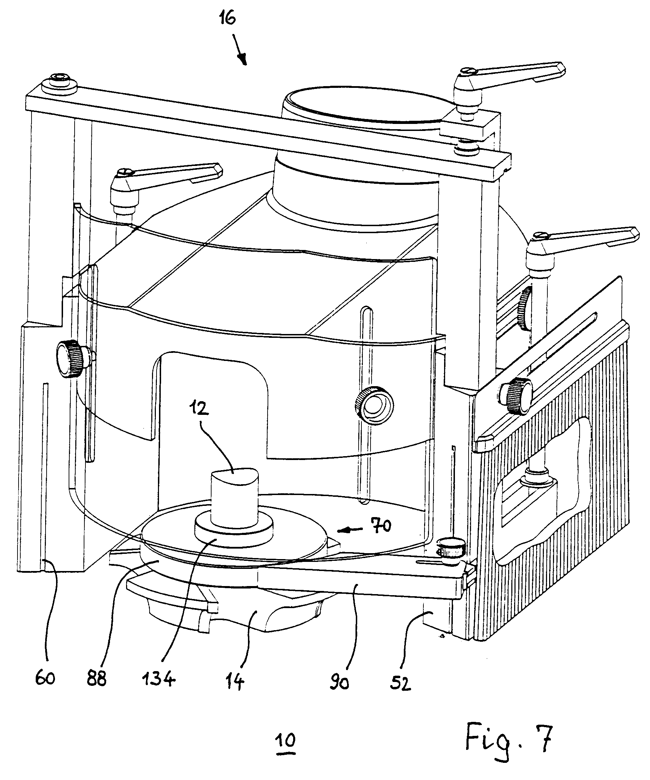

In Figur 7 ist ein waagrechter Maschinentisch 10 einer Holzfräsmaschine angedeutet, durch den hindurch eine vertikale Spindel 12 greift, deren Rotationsantrieb nicht gezeigt ist. Auf der Spindel 12 ist ein Fräswerkzeug 14 befestigt, mit dessen Hilfe ein bogenförmiges Werkstück bearbeitet werden kann.

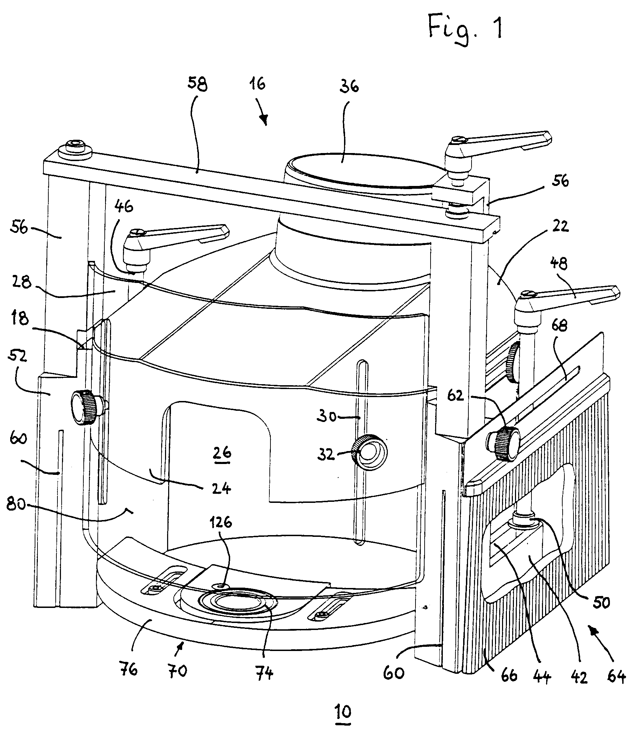

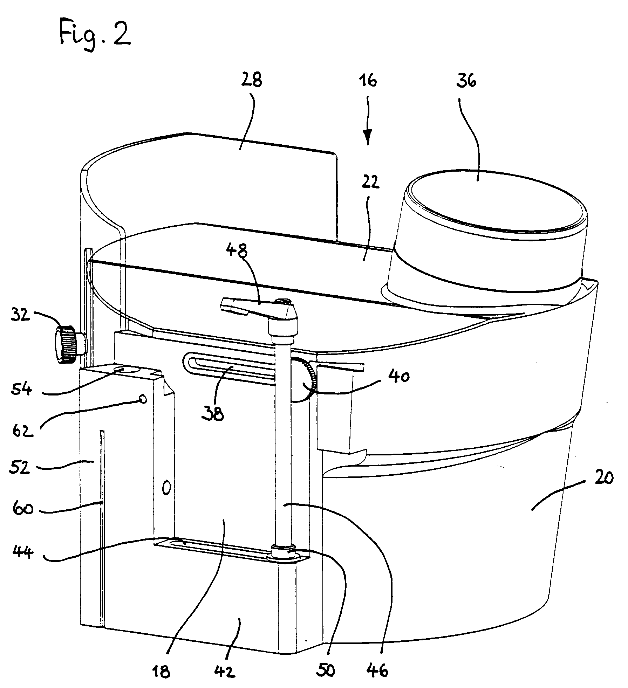

In den Figuren 1 und 2 sind die Spindel und das Werkstück nicht nochmals dargestellt, um die Erkennbarkeit der einzelnen Teile nicht zu beeinträchtigen. Auf dem Maschinentisch 10 ist eine Abdeckhaube 16 fixiert, die den Arbeitsbereich über der hier nicht dargestellten Spindel abdeckt. Die Abdeckhaube 16 besteht aus zwei Seitenwänden 18, einer diese verbindenden, trichterartig geneigten Rückwand 20 und einem Deckel 22, der fest mit der Rückwand 20 verbunden ist. Von dem Deckel 22 steht vorn und seitlich ein Rand 24 nach unten ab, der im vorderen Bereich eine nach unten offene Aussparung 26 hat, welche die Sicht in das Innere der Abeckhaube 16 vergrößert. Die vordere Öffnung der Abdeckhaube 16 kann mittels eines höhenbeweglichen, durchsichtigen Schutzschildes 28 abgedeckt werden. Das bogenförmige Schutzschild 28, in welches zwei parallele Langlöcher 30 eingearbeitet sind, läßt sich durch Klemmschrauben 32 in der gewünschten Höhe am nach unten abstehenden, vorderen Rand 24 des Deckels 22 fixieren.

In den Deckel 22 ist hinten eine Anschlußöffnung 34 eingearbeitet, an die sich ein zylindrischer Stutzen 36 für den Anschluß einer Absaugvorrichtung anschließt. Der Stutzen 36 geht im hinteren Bereich stufenlos in die gemäß Figur 2 geneigt angeordnete Rückwand 20 über, um eine störungsfreie Absaugung von Späne und Staub sicherzustellen.

Gemäß der Erfindung sind die beiden Seitenwände 18 unabhängig voneinander in horizontaler Richtung verschiebbar. Hierzu hat jede Seitenwand 18 einen oberen, horizontal verlaufenden Längsschlitz 38, durch den eine Rändelschraube 40 gesteckt ist, welche in eine nicht gezeigte Gewindebohrung am nach unten abstehenden Rand 24 des Deckels 22 eingeschraubt ist. Nach Lösen der Rändelschraube 40 kann die entsprechende Seitenwand 18 an der Abdeckhaube 16 nach vorn oder hinten verstellt werden, worauf weiter unten noch näher eingegangen wird. Im unteren Bereich hat jede Seitenwand 18 eine nach außen abstehende Stufe 42, in welche ein vertikaler Längsschlitz 44 eingearbeitet ist. Durch diesen Längsschlitz 44 ist das Gewindeende einer Schraube 46 gesteckt, die an ihrem oberen Ende einen Klemmhebel 48 trägt, der über dem Deckel 22 liegt. In ihrem mittleren Bereich hat die Schraube 46 einen Bund, der sich auf der Oberseite der Stufe 42 abstützt. Das Gewindeende der Schraube 46 ist in eine Gewindebohrung des Maschinentisches 10 eingeschraubt, so daß die Abdeckhaube 16 über die Schrauben 46 festgelegt werden kann.

Wie vor allem in Figur 2 zu erkennen ist, hat jede Seitenwand 18 einen vorderen, verdickten Bereich 52, in den eine vertikale Haltebohrung 54 eingearbeitet ist. Die beiden Haltebohrungen 54 der Seitenwände 18 dienen zur Aufnahme je einer Tragsäule 56, die durch eine Traverse 58 miteinander verbunden sind. Die Traverse 58 dient zur Befestigung nicht weiter dargestellter Druck- oder Führungsorgane, beispielsweise Druckrollen oder anderer Andruckelemente zum Halten und Führen des Werkstücks.

Gemäß der Erfindung ist ferner vorgesehen, daß in die nach vorn weisenden Kanten der verdickten Bereiche 52 jeder Seitenwand 18 Vertikalnuten 60 eingearbeitet sind. Diese dienen zur höhenverstellbaren Aufnahme eines Hilfswerkzeugs, worauf weiter unten noch näher eingegangen wird.

Jede Seitenwand 18 hat im verdickten Bereich 52 eine Gewindebohrung 62 (vgl. Figur 2), die zur Aufnahme einer Klemmschraube 62 dient. Mittels der Klemmschraube 62 ist ein Staubschutzvorhang 64 mit nach unten weisenden Borsten 66 an der Seitenwand 18 befestigt. Da die Klemmschraube 62 durch einen horizontalen Längsschlitz 68 des Staubschutzvorganges 64 greift, ist dieser horizontal verstellbar.

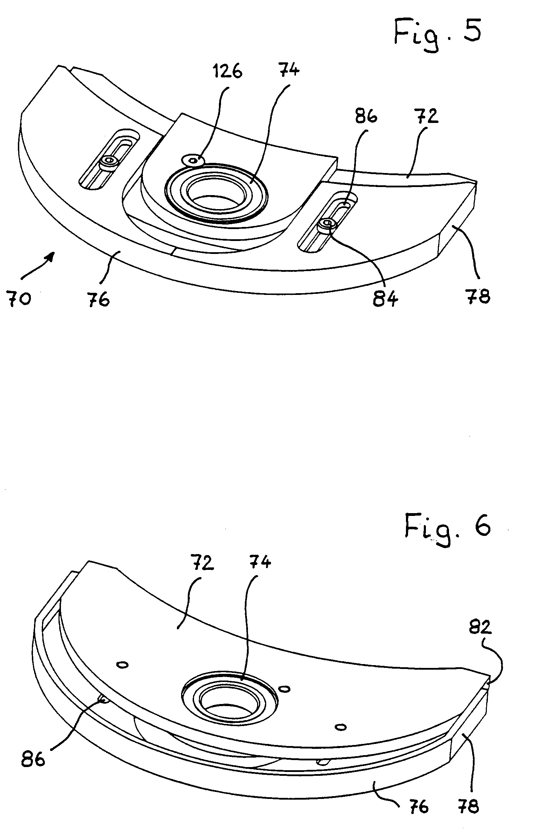

Bei der in den Figuren 1 bis 4 gezeigten Anwendung der Abdeckhaube 16 ist ein Führungsorgan 70 für das zu bearbeitende Werkstück eingesetzt, das in den Figuren 5 und 6 näher dargestellt ist. Das Führungsorgan 70 weist eine etwa bogenförmige, ebene Grundplatte 72 auf, welche mittels eines Radialkugellagers 74 auf der Spindel 12 befestigt werden kann. Das Kugellager 74 ist mittels einer Senkschraube 126 fixiert und kann leicht ausgebaut werden, wenn eine Spindel mit anderem Durchmesser eingesetzt ist. Die Grundplatte 72 trägt einen Bogenfräsanschlag 76, der zwei zueinander parallele Führungskanten 78 hat. Die Führungskanten 78 stützen sich, wie die Figuren 1 sowie 3 und 4 zeigen, an den zueinander parallelen, glatten und ebenene Innenflächen 80 der beiden Seitenwände 18 ab. Die beiden zueinander parallelen Führungskanten 78 des Bogenfräsanschlages 76 übergreifen die Seifenkanten 82 der Grundplatte 72, wodurch beim Verstellen des Bogenfräsanschlages 76 eine parallele Führung gewährleistet wird. Um die gewählte Stellung des Bogenfräsanschlages 76 zu fixieren, dienen zwei Innensechskantschrauben 84, die durch Längsnuten 86 greifen, welche parallel zu den Führungskanten 78 in den Bogenfräsanschlag 76 eingearbeitet sind. Die Innensechskantschrauben 84 sind in Gewindebohrungen der Grundplatte 72 eingeschraubt.

Da das Führungsorgan 70 mit dem Bogenfräsanschlag 76 über das Radiallager 74 auf der Spindel 12 für das Fräswerkzeug 14 gelagert ist, folgt es jeder Höhenverstellung des Fräswerkzeugs 14, so daß es nicht eigens verstellt werden muß. Eine Fixierung mittels Schrauben und Werkzeugen an den Seitenwänden 18 ist entbehrlich, da die Führungskanten 78 an den hierzu parallelen, ebenen Innenflächen 80 der Seitenwände 18 drehfest, jedoch vertikal und horizontal verschiebbar geführt sind.

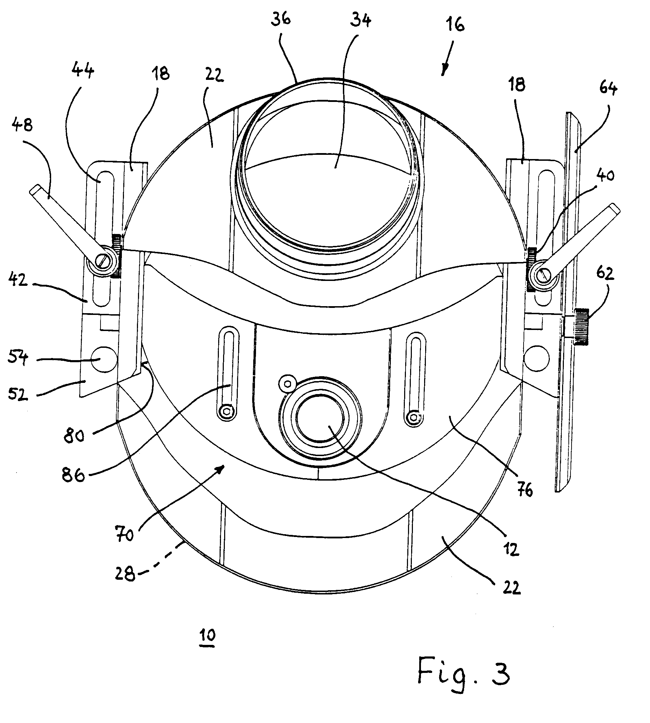

Figur 3 zeigt die erläuterte Schutz- und Führungsvorrichtung in einer Stellung, in der die beiden Seitenwände 18 in einer hinteren Stellung an der Abdeckhaube 16 festgelegt sind, wobei die in Figur 3 rechte Seitenwand 18 etwas weiter nach hinten verschoben ist als die linke Seitenwand 18. Durch diese unterschiedliche Stellung der beiden Seitenwände 18, unabhängig von der Stellung des Schutzschildes 28, kann eine optimale Einsatzstellung der gesamten Schutz- und Führungsvorrichtung hergestellt werden. Der Bogenfräsanschlag 76 des Führungsorgans 70 befindet sich in seiner vollständig eingeschobenen Stellung. Der vordere, durch das Schutzschild 28 abgedeckte Rand der Abdeckhaube 16 befindet sich in dieser Stellung sehr weit vor der Spindel 12 des Fräswerkzeugs. In dieser Stellung können Fräswerkzeuge mit großem Durchmesser eingesetzt werden, wobei die erzielte Frästiefe sehr groß ist.

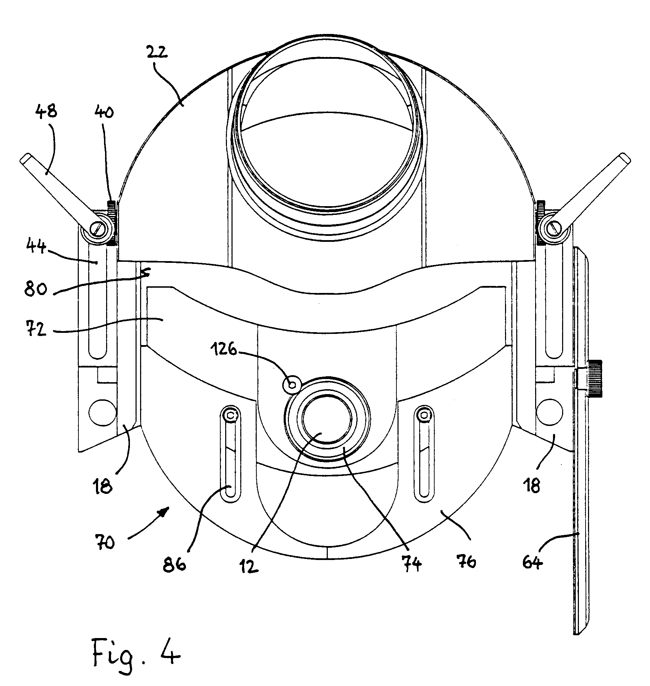

Figur 4 zeigt eine andere Extremstellung der Schutz- und Führungsvorrichtung, bei der die beiden Seitenwände 18 in ihrer vordersten Stellung an der Abdeckhaube 16 festgelegt sind. Ferner ist der Bogenfräsanschlag 76 des Führungsorgans 70 vollkommen ausgezogen. Der nicht dargestellte, vordere Rand der Abdeckhaube 16 befindet sich dicht vor dem vorderen Rand des Bogenfräsanschlags 76. In einer derartigen Stellung können mit verhältnismäßig kleinen Werkzeugen sehr geringe Frästiefen erzeugt werden.

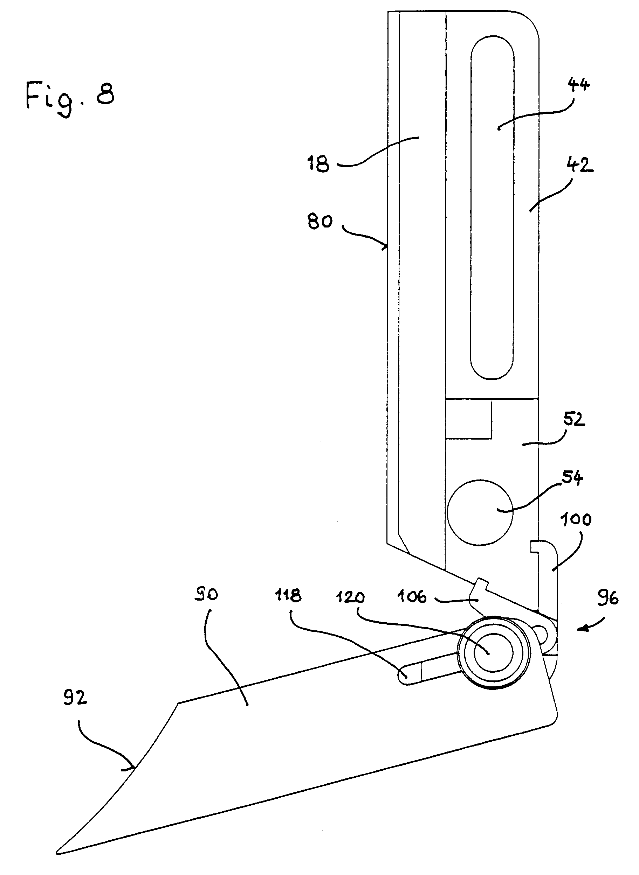

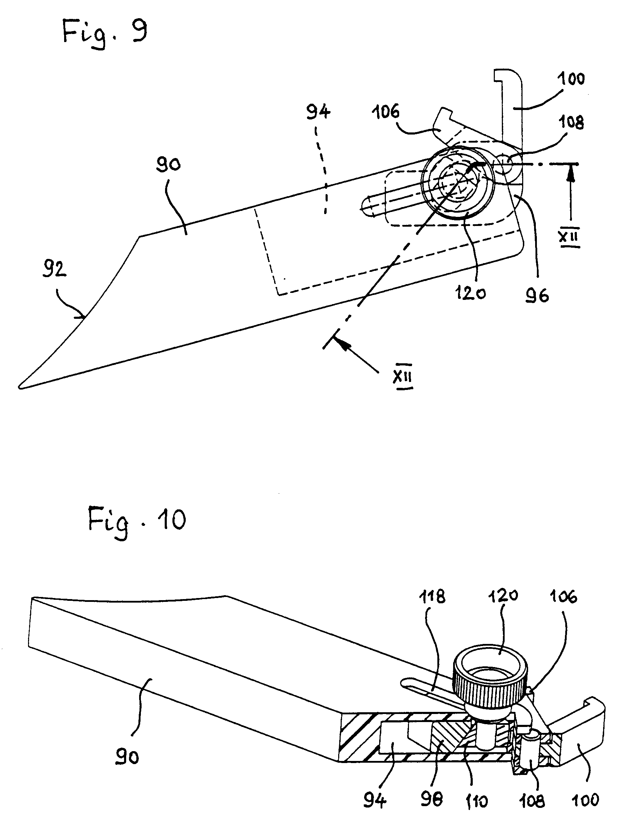

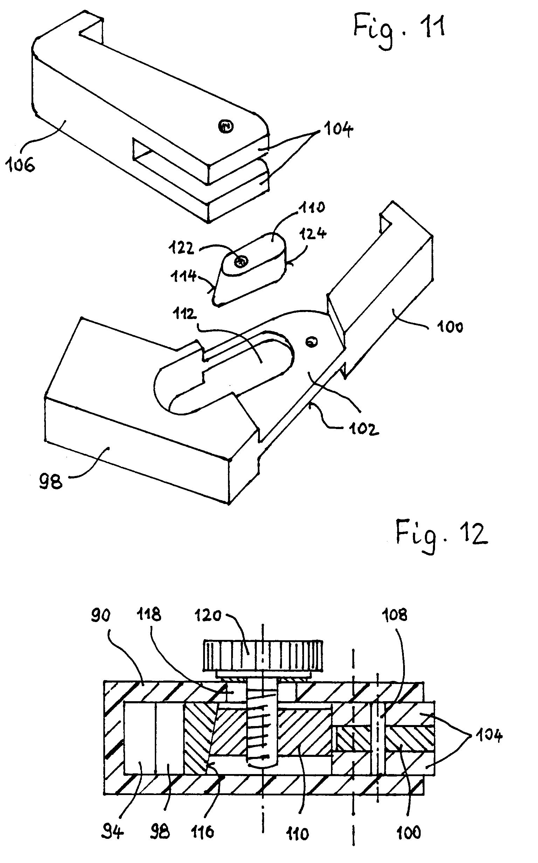

Figur 7 zeigt den Einsatz eines Führungsorgans 70 in Form eines Anlaufringes 88. Dieser ist ebenfalls über ein Radiallager auf der Spindel 12 des Fräswerkzeugs 14 gelagert und dreht sich mit dieser; das Radiallager ist hier nicht sichtbar, da es unter einem Zwischenring 134 liegt. Um eine sichere Zuführung des zu bearbeitenden Werkstücks zum Fräswerkzeug 14 zu gewährleisten, ist eine Anlaufleiste 90 vorgesehen, die in den Figuren 8 bis 10 gezeigt ist und deren freies, bogenförmiges Ende 92 am Außenumfang des Anlaufringes 88 anliegt. Die aus Kunststoff hergestellte Anlaufleiste 90, die an ihrem dem freien Ende 92 gegenüberliegenden Ende eine schlitzförmige Ausnehmung 94 hat, ist mittels eines Befestigungswinkels 96 an der vorderen Kante der in Figur 7 rechten Seitenwand 18 fixiert. Der Befestigungswinkel 96 hat, wie vor allem Figur 11 zeigt, einen quaderförmigen Grundkörper 98, von dem ein L-förmiger Schenkel 100 absteht. Im Verbindungsbereich mit dem Grundkörper 98 hat der Schenkel 100 auf beiden Seiten eine stufenförmige Abflachung 102, die zwischen zwei zueinander parallele Zinken 104 eines beweglichen L-Schenkels 106 greifen, der über einen Stift 108 relativ zu dem festen Schenkel 100 schwenkbar ist. Die beiden freien Enden der L-förmigen Schenkel 100 und 106 greifen in die beiden Vertikalnuten 60 ein, die an dem verdickten Bereich 52 der zugehörigen Seitenwand 18 ausgebildet sind.

Zum Fixieren der Anlaufleiste 90 in der gewünschten Höhe dient ein Keil 110, der in eine ovale Aussparung 112 des Grundkörpers 98 eingesetzt ist und sich mit seiner Keilfläche 114 an einer entsprechenden Schrägfläche 116 der ovalen Aussparung 112 abstützt. Der in der beschriebenen Weise ausgebildete Befestigungswinkel 96 ist in die Ausnehmung 94 der Anlaufleiste 90 eingesetzt, welche in diesem Bereich ein in ihrer Längsrichtung verlaufendes Langloch 118 hat. Durch dieses Langloch 118 greift der Schaft einer Feststellschraube 120, welcher in eine Gewindebohrung 122 des Keiles 110 eingeschraubt ist. Wenn die Feststellschraube 120 festgezogen wird, zieht ihr Gewindeschaft den Keil 110 nach oben, so daß dessen Keilfläche 114 an der Schrägfläche 116 gleitet und dabei mit seiner gegenüberliegenden, vertikalen Fläche 124 gegen die dieser gegenüberliegenden Seite des beweglichen Schenkels 106 drückt, so daß dieser in Richtung auf den festen Schenkel 100 gedreht wird. Auf diese Weise wird der Befestigungswinkel 96 in den beiden Vertikalnuten 60 fixiert, wobei gleichzeitig auch die Anlaufleiste 90 in der gewünschten Stellung auf dem Befestigungswinkel 96 festgeklemmt wird.

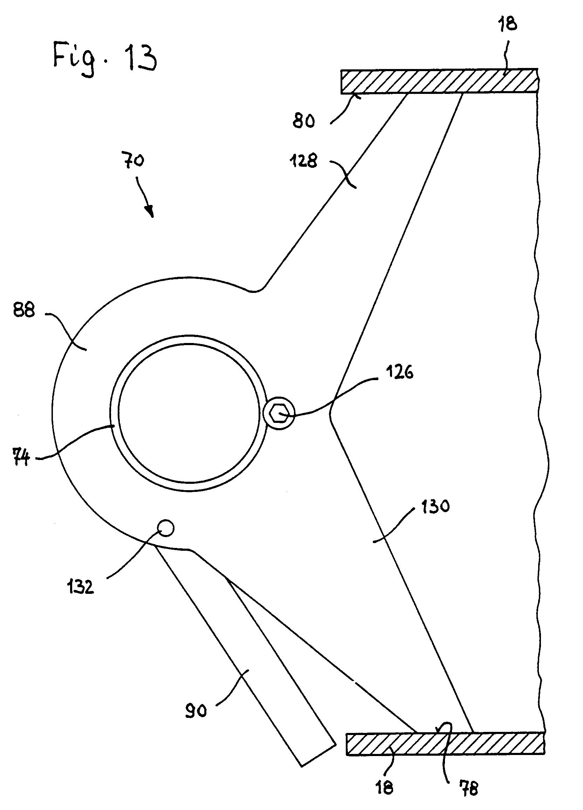

Figur 13 zeigt eine weitere Variante des Führungsorgans 70, welches hier ebenfalls als Anlaufring 88 ausgebildet ist, der mittels des Radiallagers 74 auf der Spindel 12 gelagert ist. Das Radiallager 74 ist mittels der Senkschraube 126 auswechselbar im Anlaufring 88 befestigt. Von dem Anlaufring 88 stehen zwei asymmetrisch geformte Arme 128 und 130 ab, die ein V bilden und deren freie Enden als zwei zueinander parallele Führungskanten 78 ausgebildet sind. Diese Führungskanten 78 stützen sich an den gegenüberliegenden, zueinander parallelen Innenflächen 80 der Seitenwände 18 ab, so daß auch bei rotierender Spindel das Führungsorgan 70 drehfest innerhalb der Abdeckhaube 16 gehalten wird. Da zwischen der Abdeckhaube 16 und dem Führungsorgan 70 ebenfalls keinerlei Befestigungselemente vorgesehen sind, läßt sich das Führungsorgan 70 bei Bedarf jederzeit relativ zu den Seitenwänden 18 der Abdeckhaube 16 sowohl in horizontaler als auch in vertikaler Richtung verstellen.

Aus Figur 13 geht schließlich hervor, daß von dem Führungsorgan 70 eine Anlaufleiste 90 absteht, die am Führungsorgan 88 mittels eines Stiftes 132 schwenkbar gelagert ist. Die Anlenkung der Anlaufleiste 90 ist in dem Bereich vorgesehen, in dem diese nahezu tangential in den Anlaufring 88 übergeht, dessen Rundung am anderen Ende so weit wie möglich bis zu dem dort schmäleren Arm 128 geführt ist. Auf diese Weise können bogenförmige Werkstücke auf einem großen Umfangsbereich des Anlaufringes 88 geführt werden. Die Länge der Anlaufleiste 90 kann teleskopisch verstellt werden, was nicht näher dargestellt ist.

## Patentansprüche

1. Schutz- und Führungsvorrichtung für Holzfräsmaschinen zum Bearbeiten bogenförmiger Werkstücke mittels eines an einer Spindel angebrachten Fräswerkzeugs, das aus einem waagrechten Maschinentisch vertikal herausragt und unter einer am Maschinentisch befestigten Abdeckhaube liegt, innerhalb der ein Führungsorgan für das Werkstück gehalten ist und die aus zwei durch einen Deckel miteinander verbundenen Seitenwänden, einer Rückwand und einem höhenverstellbaren, vorderen Schutzschild besteht, wobei am Deckel eine Anschlußöffnung für eine Absaugvorrichtung vorgesehen ist, **dadurch gekennzeichnet**, daß die beiden Seitenwände (18) parallel zueinander verlaufende, glatte und ebene Innenflächen (80) haben, unabhängig voneinander horizontal verschiebbar an einem vom Deckel (22) nach unten abstehenden Rand (24) fixierbar sind und in ihrem unteren Bereich vertikale Längsschlitze (44) zum Durchstecken von Schrauben (46) für die Befestigung der Abdeckhaube (16) auf dem Maschinentisch (10) haben.

2. Schutz- und Führungsvorrichtung nach Anspruch 1, **dadurch gekennzeichnet**, daß in den Seitenwänden (18) vertikale Haltebohrungen (54) zur Aufnahme von Tragelementen (56, 58) für Druck- oder Führungsorgane ausgebildet sind.

3. Schutz- und Führungsvorrichtung nach Anspruch 1 oder 2, **dadurch gekennzeichnet**, daß die vorderen Kanten der Seitenwände (18) Vertikalnuten (60) zur höhenverstellbaren Aufnahme eines Hilfswerkzeugs, insbesondere einer Anlaufleiste (90) haben.

4. Schutz- und Führungsvorrichtung nach Anspruch 3, **dadurch gekennzeichnet**, daß an der Anlaufleiste (90) ein Befestigungswinkel (96) mit zwei L-förmigen Schenkeln (100, 106) zum Eingriff in die Vertikalnuten (60) angebracht ist, wobei ein Schenkel (106) schwenkbar gelagert ist.

5. Schutz- und Führungsvorrichtung nach Anspruch 4, **dadurch gekennzeichnet**, daß zur Schwenkverstellung des beweglichen Schenkels (106) in einer Aussparung (112) des Befestigungswinkels (96) ein durch eine Feststellschraube (120) höhenbeweglicher Keil (110) vorgesehen ist.

6. Schutz- und Führungsvorrichtung nach einem der Ansprüche 3 bis 5, **dadurch gekennzeichnet**, daß der Befestigungswinkel (96) in Längsrichtung der Anlaufleiste (90) verstellbar an dieser befestigt ist.

7. Schutz- und Führungsvorrichtung nach einem der vorhergehenden Ansprüche, **dadurch gekennzeichnet**, daß der vom Deckel (22) der Abdeckhaube (16) nach unten abstehende Rand (24) im mittleren Bereich eine nach unten offene Aussparung (26) hat.

8. Schutz- und Führungsvorrichtung nach einem der vorhergehenden Ansprüche, **dadurch gekennzeichnet**, daß an wenigstens einer Seitenwand (18) ein Staubschutzvorhang (64) mit nach unten weisenden Borsten (66) verstellbar befestigt ist.

9. Schutz- und Führungsvorrichtung nach einem der vorhergehenden Ansprüche, **dadurch gekennzeichnet**, daß sich an den zueinander parallelen Innenflächen (80) der Seitenwände (18) ein Führungsorgan (70) mit zwei zueinander parallelen Führungskanten (78) abstützt und an diesen Innenflächen (80) horizontal und vertikal verschiebbar geführt ist.

10. Schutz- und Führungsvorrichtung nach Anspruch 9, **dadurch gekennzeichnet**, daß das Führungsorgan (70) über ein Radiallager (74) auf der Spindel (12) befestigt ist.

11. Schutz- und Führungsvorrichtung nach Anspruch 9 oder 10, **dadurch gekennzeichnet**, daß das Führungsorgan (70) eine an der Spindel (12) gelagerte, an den Innenflächen (80) der Seitenwände (18) abgestütze Grundplatte (72) aufweist, die einen Bogenfräsanschlag (76) trägt, welcher zur Einstellung der Frästiefe auf der Grundplatte (72) horizontal verstellbar gelagert ist.

12. Schutz- und Führungsvorrichtung nach Anspruch 11, **dadurch gekennzeichnet**, daß die gewählte Stellung des Bogenfräsanschlages (76) auf der Grundplatte (72) mittels Klemmschrauben (84) fixierbar ist, welche durch Längsnuten (86) greifen, die parallel zu den Führungskanten (78) in den Bogenfräsanschlag (76) eingearbeitet sind.

13. Schutz- und Führungsvorrichtung nach einem der Ansprüche 10 bis 12, **dadurch gekennzeichnet**, daß im mittleren Bereich der Grundplatte (72) das Radiallager (74) auswechselbar befestigt ist.

14. Schutz- und Führungsvorrichtung nach Anspruch 9 oder 10, **dadurch gekennzeichnet**, daß ein Teil des Führungsorgans (70) als Anlaufring (88) ausgebildet ist, von dem zwei Arme (128, 130) abstehen, an deren freien Enden die Führungskanten (78) ausgebildet sind.

15. Schutz- und Führungsvorrichtung nach Anspruch 14, **dadurch gekennzeichnet**, daß von dem Führungsorgan (70) eine Anlaufleiste (90) schwenkbar absteht, deren Länge teleskopisch veränderbar ist.

## Claims

1. A protective and guiding device for wood-shaping machines for shaping curved workpieces by means of a cutting tool mounted on a spindle and projecting vertically from a horizontal supporting table and situated below a covering hood which is secured to the supporting table and inside which a guide member for the workpiece is held and which comprises two lateral walls connected to each other by a cover, a rear wall and a vertically adjustable front shield, wherein a connecting opening for a suction device is provided on the cover, **characterized in that** the two lateral walls (18) have smooth and flat inner surfaces (80) extending parallel to each other, are flexible on an edge (24) projecting downwards from the cover (22) so as to be displaceable horizontally independently of each other and are provided in their lower region with vertical longitudinal slits (44) for the insertion of bolts (46) for fastening the covering hood (16) to the supporting table (10).

2. A protective and guiding device according to Claim 1, **characterized in that** vertical retaining bores (54) for receiving support members (56, 58) for pressing or guiding members are formed in the lateral walls (18).

3. A protective and guiding device according to Claim 1 or 2, **characterized in that** the front edges of the lateral walls (18) have vertical grooves (60) for receiving an auxiliary tool, in particular an approach strip (90), in a vertically adjustable manner.

4. A protective and guiding device according to Claim 3, **characterized in that** an angled fastening means (96) with two L-shaped arms (100, 106) for engaging in the vertical grooves (60) is attached to the approach strip (90), wherein one arm (106) is mounted pivotably.

5. A protective and guiding device according to Claim 4, **characterized in that** a wedge (110) movable vertically by a fastening screw (120) is provided in a recess (112) in the angled fastening means (96) in order to displace the movable arm (106) pivotably.

6. A protective and guiding device according to one of Claims 3 to 5, **characterized in that** the angled fastening means (96) is secured to the approach strip (90) so as to be displaceable in the longitudinal direction thereof.

7. A protective and guiding device according to one of the preceding Claims, **characterized in that** the edge (24) projecting downwards from the cover (22) of the covering hood (16) is provided in its central region with a recess (26) open at the bottom.

8. A protective and guiding device according to one of the preceding Claims, **characterized in that** a dust-protection screen (64) with downwardly directed bristles (66) is displaceably secured to at least one lateral wall (18).

9. A protective and guiding device according to one of the preceding Claims, **characterized in that** a guide member (70) with two guiding edges (78) parallel to each other is supported on the mutually parallel inner surfaces (80) of the lateral walls (18) and is guided horizontally and vertically displaceably on the said inner surfaces (80).

10. A protective and guiding device according to Claim 9, **characterized in that** the guide member (70) is secured to the spindle (12) by way of a radial bearing (74).

11. A protective and guiding device according to Claim 9 or 10, **characterized in that** the guide member (70) comprises a base plate (72) which is mounted on the spindle (12) and is supported on the inner surfaces (80) of the lateral walls (18) and which has a curved cutting stop (76) mounted horizontally displaceably on the base plate (72) in order to set the cutting depth.

12. A protective and guiding device according to Claim 11, **characterized in that** the selected setting of the curved cutting stop (76) is fixable on the base plate (72) by means of clamping bolts (84) which engage through longitudinal grooves (86) formed parallel to the guiding edges (78) in the curved cutting stop (76).

13. A protective and guiding device according to one of Claims 10 to 12, **characterized in that** the radial bearing (74) is secured in an interchangeable manner in the central region of the base plate (72).

14. A protective and guiding device according to Claim 9 or 10, **characterized in that** part of the guide member (70) is constructed in the form of an approach ring (88) from which two arms (128, 130) project, at the free ends of which the guiding edges (78) are formed.

15. A protective and guiding device according to Claim 14, **characterized in that** an approach strip (90), the length of which is variable in a telescopic manner, projects from the guide member (70) in a pivotable manner.

## Revendications

1. Dispositif de protection et de guidage pour fraiseuses à bois destinées à usiner des pièces cintrées à l'aide d'un outil de fraisage fixé sur une broche, l'outil dépassant de façon verticale du banc de machine et situé sous un capot fixé sur le banc de machine, capot à l'intérieur duquel est fixé un organe de guidage pour la pièce à usiner et qui est composé de deux parois latérales reliées par un couvercle, d'une paroi arrière et d'une protection avant réglable en hauteur avec un raccord d'aspiration dans le couvercle, **caractérisé en ce que** les deux parois latérales (18) possédant des surfaces internes (80) parallèles, lisses et planes, sont fixées de façon indépendante et à déplacement horizontal, sur un bord (24) dépassant du couvercle (22) vers le bas et dont la partie inférieure présente des fentes verticales (44) destinées à recevoir des vis (46) pour la fixation du capot (16) sur le banc de machine (10).

2. Dispositif de protection et de guidage selon la revendication 1, **caractérisé en ce que** les parois latérales (18) présentent des perçages de fixation verticaux (54) destinés à recevoir des éléments supports (56, 58) pour des organes de compression ou de guidage.

3. Dispositif de protection et de guidage selon la revendication 1 ou 2, **caractérisé en ce que** les arêtes avant des parois latérales (18) présentent des rainures verticales (60) destinées à recevoir, avec un réglage en hauteur, un outil d'appoint, notamment une barre d'approche (90).

4. Dispositif de protection et de guidage selon la revendication 3, **caractérisé en ce que** la barre d'approche (90) possède une cornière de fixation (96) avec deux côtés en L (100, 106) pour l'engrènement dans les rainures verticales (60), un des côtés (106) étant basculable.

5. Dispositif de protection et de guidage selon la revendication 4, **caractérisé en ce qu**'il existe pour le réglage basculant du côté mobile (106) un coin (110) réglable en hauteur par une vis d'arrêt (120) dans un évidement (112) de la cornière de fixation (96).

6. Dispositif de protection et de guidage selon une des revendications 3 à 5, **caractérisé en ce que** la cornière de fixation (96) est fixée avec un réglage longitudinal sur la barre d'approche (90).

7. Dispositif de protection et de guidage selon une des revendications précédentes, **caractérisé en ce que** le bord (24) dépassant vers le bas du couvercle (22) du capot (16) présente, dans sa partie centrale, un évidement (26) ouvert vers le bas.

8. Dispositif de protection et de guidage selon une des revendications précédentes, **caractérisé en ce que** sur au moins une des parois latérales (18) il existe un rideau anti-poussière (64) avec des brosses (66) réglables dirigées vers le bas.

9. Dispositif de protection et de guidage selon une des revendications précédentes, **caractérisé en ce qu**'un organe de guidage (70) avec deux arêtes de guidage (78) parallèles s'appuie sur les surfaces internes (80) parallèles des parois latérales (18), organe qui est guidé avec un déplacement horizontal et vertical sur ces même surfaces internes (80).

10. Dispositif de protection et de guidage selon la revendication 9, **caractérisé en ce que** l'organe de guidage (70) est fixé sur la broche (12) par l'intermédiaire d'un roulement à billes (74).

11. Dispositif de protection et de guidage selon la revendication 9 ou 10, **caractérisé en ce que** l'organe de guidage (70) présente une plaque de base (72) logée sur la broche (12) et appuyée sur les surfaces internes (80) des parois latérales (18), qui supporte une butée de fraisage cintrée (76) logée sur la plaque de base (72) avec un réglage horizontal pour la mise au point de la profondeur de fraisage.

12. Dispositif de protection et de guidage selon la revendication 11, **caractérisé en ce que** la position choisie de la butée de fraisage cintrée (76) sur la plaque de base (72) peut être fixée à l'aide de vis de serrage (84) passant à travers les rainures longitudinales (86) parallèles aux arêtes de guidage (78) dans la butée de fraisage cintrée (76).

13. Dispositif de protection et de guidage selon une des revendications 10 à 12, **caractérisé en ce que** dans la partie centrale de la plaque de base (72) le roulement à billes (74) est interchangeable.

14. Dispositif de protection et de guidage selon la revendication 9 ou 10, **caractérisé en ce qu**'une partie de l'organe de guidage (70) fait fonction d'anneau d'approche (88) avec deux bras (128, 130), aux extrémités libres desquels se trouvent les arêtes de guidage (78).

15. Dispositif de protection et de guidage selon la revendication 14, **caractérisé en ce qu**'une barre d'approche (90) basculable, dont la longueur est variable de façon télescopique, dépasse de l'organe de guidage (70).
